Europäisches Patentamt

European Patent Office

Office européen des brevets

(11) Numéro de publication : **0 448 428 A1**

# (12) DEMANDE DE BREVET EUROPEEN

(21) Numéro de dépôt : 91400476.7

(22) Date de dépôt : 21.02.91

(51) Int. Cl.⁵ : **B62D 33/02,** B62D 25/20, B60P 3/035

(30) Priorité : 21.03.90 FR 9003630

(43) Date de publication de la demande :
25.09.91 Bulletin 91/39

(84) Etats contractants désignés :
AT BE DE ES FR GB

(71) Demandeur : S.E.S.R. - SOCIETE
EUROPEENNE DE SEMI-REMORQUES
44, rue François 1er
F-75008 Paris (FR)

(72) Inventeur : Richez, Jacques
162 Avenue des Acacias
F-59553 Cuincy (FR)

(74) Mandataire : Kügele, Bernhard et al
NOVAPAT FRANCE 63 bis, boulevard
Bessières
F-75017 Paris (FR)

(54) Structure longitudinale pour plateau de semi-remorque et son procédé de fabrication.

(57)    La présente invention concerne une structure longitudinale pour plateau de semi-remorque constituée par un longeron supérieur (1), un longeron inférieur (2) reliés par une âme rigide (3). Le profilé supérieur (1), à section constante, présente une patte latérale (9) sur laquelle est soudé un profilé additionnel (8) à section constante. La présente invention concerne également un procédé de fabrication d'un longeron de section variable.
    Application : réalisation de plateau de semi-remorque.

EP 0 448 428 A1

## STRUCTURE LONGITUDINALE POUR PLATEAU DE SEMI-REMORQUE ET SON PROCEDE DE FABRICATION

La présente invention est relative à une structure longitudinale pour plateau de semi-remorque. Elle trouve son application dans le domaine de la construction de véhicules industriels destinés aux transports de marchandises.

Le plateau de semi-remorque est habituellement réalisé par un assemblage de longerons et de traverses métalliques entrecroisés. On utilise essentiellement deux types de matériaux: l'acier ou l'aluminium.

L'aluminium constitue un choix très satisfaisant malgré son coût élevé, en raison de ces caractéristiques spécifiques: résistance à la corrosion, gain de poids important sur le véhicule réalisé à partir de ce matériau.

Dans l'état de l'art, les structures longitudinales en aluminium sont constituées par deux longerons reliés par une âme rigide. Les deux longerons sont réalisés par extrusion. Ils sont ensuite déformés latéralement par une presse hydraulique de façon à s'adapter au profil déterminé par l'âme rigide.

Ce mode de réalisation n'impose toutefois pas une section constante des profilés sur toute leur longueur. Or, pour certaines applications, il serait préférable de réaliser une structure longitudinale présentant différents types de section. En particulier, pour la réalisation de plateaux destinés au transport de bobines de grandes dimensions par exemple, il est nécessaire de disposer, sur une certaine longueur, d'une section de grande dimension. Par contre, en particulier pour des raisons de gain de poids, les autres parties du longeron doivent présenter une section réduite.

Les techniques d'extrusion ne permettent pas à ce jour de réaliser de telles structures longitudinales, la section étant nécessairement constante sur toute la longueur du profilé extrudé.

L'objet de la présente invention est de remédier à cet inconvénient en réalisant une structure longitudinale mettant en oeuvre deux longerons reliés par une âme rigide la section d'au moins l'un des longerons étant variable.

La présente invention concerne plus particulièrement une structure longitudinale pour plateau de semi-remorque constitué par deux longerons reliés par une âme rigide, dans laquelle l'un des longerons est constitué par un profilé extrudé principal, à section constante accolé sur une partie au moins de sa longueur à au moins un profilé extrudé additionnel de section constante disposé parallèlement audit profilé principal.

De préférence, le profilé additionnel est soudé sur le profilé principal.

Avantageusement, la section du profilé principal présente la forme d'un T muni d'une patte latérale supplémentaire sur laquelle vient se raccorder l'extrémité de la section du profilé additionnel.

De préférence, le bord de la patte latérale du profilé principal et le bord de l'extrémité correspondant du profilé additionnel présente une ligne biseautée.

Le profilé additionnel constitue, selon un mode d'application, un support de fosse pour le transport de cylindre.

La présente invention concerne également un procédé de fabrication d'un longeron pour structure longitudinale de plateau de semi-remorque, présentant au moins deux sections différentes, consistant à assembler un profilé principal de section constante et au moins un profilé extrudé additionnel de section constante.

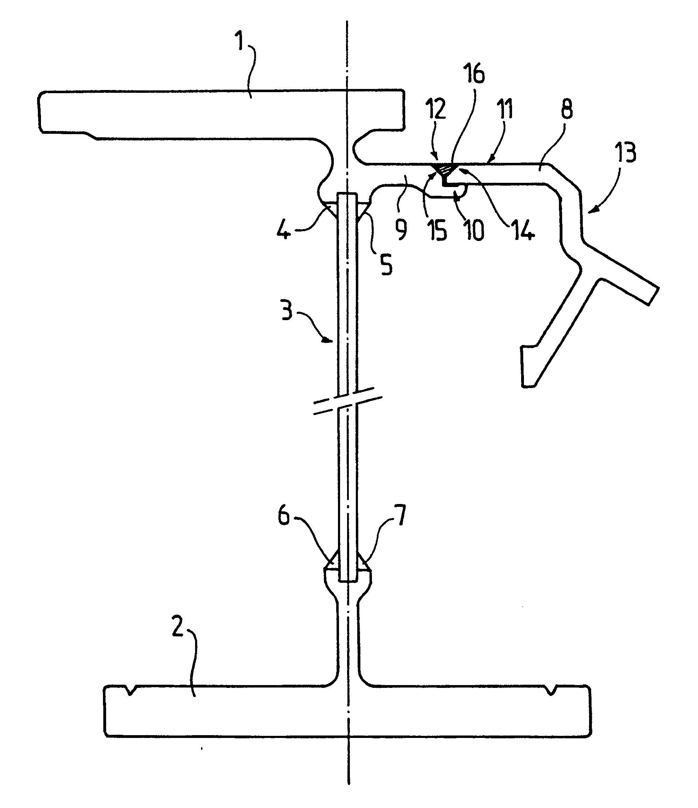

La présente invention sera mieux comprise au vu de la figure unique représentant une vue en coupe transversale d'une structure longitudinale selon la présente invention.

La structure longitudinale selon la présente invention est constituée par un longeron supérieur (1) et par un longeron inférieur (2) reliés par une âme rigide centrale (3). Le longeron supérieur (1) et le longeron inférieur (2) sont réalisés par extrusion. La section est déterminée de façon à obtenir un poids total optimal, et une résistance satisfaisante aux contraintes mécaniques que subira la plate-forme de semi-remorque.

L'un au moins des profilés des longerons, généralement le profilé inférieur subit avant l'assemblage une déformation transversale dans une presse hydraulique. Les deux profilés (1) et (2) sont ensuite mis en place de part et d'autre de l'âme rigide centrale (3) cette âme rigide, également en aluminium, présente un profil longitudinal correspondant au profil longitudinal des deux profilés supérieur (1) et inférieur (2). La liaison s'effectue par des cordons de soudure (4, 5, 6, 7).

Sur une partie de sa longueur, le profilé supérieur (1) est prolongé latéralement par un profilé additionnel (8). Ce profilé additionnel (8) est également réalisé par extrusion. Il présente donc une section constante sur toute sa longueur. Le profilé additionnel (8) est disposé parallèlement au profilé principal supérieur (1).

Le profilé principal (1) présente une section en forme de "T" dissymétrique, avec une branche plus grande que l'autre. Il présente une patte latérale (9) dont l'extrémité (10) coopère avec l'extrémité (11) du profilé additionnel. La patte latérale (9) présente à son extrémité (10) un décrochement correspondant à l'épaisseur de l'extrémité (11) du profilé additionnel (8). De ce fait, la surface supérieure (12) de la patte latérale (9) et la surface supérieure (13) de l'extrémité (11) du profilé additionnel (8) sont coplanaires.

Le bord de l'extrémité (11) du profilé additionnel (8) présente un biseau (14).

Le bord correspondant de la patte latérale (12) présente également un biseau (15). La liaison entre la patte latérale (9) et le profilé additionnel (8) s'effectue par un cordon de soudure (16) la section du profilé additionnel (8) est déterminée en fonction de son application. Dans l'exemple décrit, ce profilé additionnel est destiné à supporter une fosse pour le transport de bobines métalliques ou d'autres cylindres de forte densité. De ce fait, sa section correspond sensiblement à la section transversale de telles fosses.

Il est bien évident que la présente invention n'est pas limitée à l'exemple décrit, mais que l'homme de l'art est en mesure d'envisager différentes variantes sans pour autant sortir du cadre de l'invention.

## Revendications

**1** - Structure longitudinale pour plateau de semi-remorque constituée par deux longerons (1, 2) reliés par une âme rigide (3), l'un au moins des longerons étant constitué par un profilé extrudé principal (1) à section constante, caractérisée en ce que le profilé principal (1) est accolé sur une partie seulement de sa longueur, à au moins un profilé extrudé additionnel (8) de section constante disposé parallèlement audit profilé principal (1).

**2** - Structure longitudinale pour plateau de semi-remorque selon la revendication 1, caractérisée en ce que le profilé additionnel (8) est soudé sur le profilé principal (1).

**3** - Structure longitudinale pour plateau de semi-remorque selon la revendication 1 ou 2, caractérisée en ce que la section du profilé principal (1) présente la forme d'un T muni d'une patte latérale (9) supplémentaire sur laquelle vient se raccorder l'extrémité (11) de la section du profilé additionnel (8).

**4** - Structure longitudinale pour plateau de semi-remorque selon l'une quelconque des revendications 1 à 3, caractérisée en ce que le bord de la patte latérale (9) du profilé principal (1) et le bord de l'extrémité correspondant du profilé additionnel présentent une ligne biseautée.

**5** - Structure longitudinale pour plateau de semi-remorque selon l'une quelconque des revendications précédentes, caractérisée en ce que le profilé additionnel (8) constitue un support de fosse pour le transport de cylindres.

**6** - Procédé de fabrication d'un profilé longitudinal pour structure longitudinale de plateau de semi-remorque, caractérisé en ce que l'on soude parallèlement à un profilé principal extrudé, de section constante, sur seulement une partie de la longueur de ce dernier, au moins un profilé additionnel extrudé de section constante.

Office européen
des brevets

# RAPPORT DE RECHERCHE EUROPEENNE

Numero de la demande

EP 91 40 0476

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 622 918 (STAFFE) <br> * Colonne 3, lignes 1-12; figures 2,3 * <br> --- | 1,2,5,6 | B 62 D 33/02 <br> B 62 D 25/20 <br> B 60 P 3/035 |
| Y | DE-A-3 627 841 (GROSS ALUMINIUM GmbH) <br> * Colonne 3, ligne 49 - colonne 4, ligne 11; revendications 1,2,5,6; figures * <br> --- | 1-6 | |
| Y | AT-B- 362 238 (KROMAG A.G.) <br> * Page 2, lignes 39-46; revendication 1; figure 2 * <br> --- | 1-6 | |
| A | EP-A-0 248 127 (HOCKNEY PTY LTD) <br> * Colonne 2, lignes 1-24; revendication 1; figures 1,4 * <br> --- | 1,3 | |
| A | GLASERS ANNALEN, vol. 111, no. 3, mars 1987, pages 66-72, Belin, DE; J. Morotini: "Erfahrung bei der Instandhaltung und Schadensbeseitigung an S-Bahn-Wendezugwagen in Aluminium-Integralbauweise" <br> * Page 66, colonne de gauche, alinéa 2 - colonne de droite, alinéa 212; figure 3 * <br> --- | 1-4 | DOMAINES TECHNIQUES RECHERCHES (Int. Cl.5) <br><br> B 62 D <br> B 60 P <br> B 61 D |
| A | FR-A-2 615 470 (ALUMINIUM PRESS-UND WALZWERK MUNCHENSTEIN A.G.) <br> * Revendication 1; figure 3 * <br> --- | 1 | |
| A | FR-A-2 497 162 (ARBEL INDUSTRIE SA) <br> * Page 4, lignes 1-17; revendication 1; figures 1,3,5-8,10 * <br> ----- | 1 | |

Le présent rapport a été établi pour toutes les revendications

| Lieu de la recherche | Date d'achèvement de la recherche | Examinateur |
|---|---|---|
| LA HAYE | 14-06-1991 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P0402)